# EUROPÄISCHE PATENTANMELDUNG

(11) **EP 1 369 663 A1**
(43) Veröffentlichungstag der Anmeldung: **10.12.2003**
(21) Anmeldenummer: 03011254.4
(22) Anmeldetag: 16.05.2003
(51) Int. Cl.: G01B 9/04, G02B 21/22, G02B 27/32, G02B 21/02, G01M 11/02

(54) **Verfahren zur Kalibrierung eines Stereomikroskops sowie kalibrierbares Stereomikroskop**

(30) Priorität: 06.06.2002 DE 10225193
(71) Anmelder: Leica Microsystems Schweiz AG, 9435 Heerbrugg (CH)
(72) Erfinder: Bruehl, Wolfgang, 63110 Rodgau (DE); Parlatano, Danilo, 9443 Widnau (CH); Bertschi, Peter, 9450 Alstätten (CH)
(74) Vertreter: Hössle Kudlek & Partner

(57) **Zusammenfassung**

Die Erfindung betrifft ein Verfahren zur Kalibrierung der Vergrößerung eines Stereomikroskops mit variabler Vergrößerung mit folgenden Schritten:
- Positionierung eines Objekt-Referenzmaßes (10) mit einer vorbekannten Skalierung, insbesondere eines Objekt-Mikrometers, in einer Objektebene (8) des Stereomikroskops,
- Bereitstellung eines Okular-Referenzmaßes (6a) vorbekannter Skalierung, insbesondere einer Strichplatte, in einer Zwischenbildebene (7) des Stereomikroskops,
- Veränderung der Vergrößerung des Mikroskops derart, dass das Bild des Objekt-Referenzmaßes (10) mit dem Okular-Referenzmaß (6a) in der Zwischenbildebene (7) zur optischen Übereinstimmung gebracht wird, zur Bestimmung einer dieser Übereinstimmung entsprechenden Zoom-Position eines verwendeten Zoom-Systems (4) ,
- Feststellung einer Ist-Vergrößerung des Stereomikroskops in dieser Zoom-Position auf der Grundlage des durch die zur Übereinstimmung gebrachten Skalierungen von Objekt-Referenzmaß (10) und Okular-Referenzmaß (6a) definierten Abbildungsmaßstabes,
- Feststellung einer Nominal-Vergrößerung des Stereomikroskops in dieser Zoom-Position,
- rechnerische In-Beziehung-Setzung von Ist-Vergrößerung und Nominal-Vergrößerung,
- Berechnung von Vergrößerungen für weitere Zoom-Positionen, insbesondere über den gesamten Zoom-Bereich, auf der Grundlage der rechnerischen In-Beziehung-Setzung von Nominal-Vergrößerung und Ist-Vergrößerung.

## Beschreibung

Die vorliegende Erfindung betrifft ein Verfahren zur Kalibrierung eines Stereomikroskops nach dem Oberbegriff des Patentanspruchs 1 sowie ein entsprechend kalibrierbares Stereomikroskop. Die Erfindung betrifft ferner eine Anwendung eines entsprechend kalibrierten Stereomikroskops zur Längenmessung.

Stereomikroskope mit Zoomsystemen, die eine kontinuierliche Variation der Vergrößerung bei feststehender Objekt- und Bildlage erlauben, sind bekannt. Diese Systeme weisen in der Regel wenigstens zwei Linsengruppen auf, die zur Verwirklichung der Vergrößerungsänderung bei fester Objektund Bildlage relativ zueinander verschiebbar sind. Der Zusammenhang zwischen der Position der Zoom-Gruppen und den Vergrößerungen des Zoomsystems kann in Form von Funktionen oder Look-Up-Tabellen ebenfalls als bekannt vorausgesetzt werden.

Eine Anzeige der Vergrößerung eines Stereomikroskops ist ebenfalls bekannt, beispielsweise durch eine auf einem Drehknopf, welcher zur relativen Verschiebung der Zoom-Gruppen betätigt wird, vorgesehenen Skala.

Die Gesamtvergrößerung eines Stereomikroskops wird definitionsgemäß durch eine Multiplikation des Abbildungsmaßstabes der Abbildung eines Objekts in die Zwischenbildebene, welche in der Brennebene eines Okulars liegt, mit der Vergrößerung des Okulars gebildet. Der Abbildungsmaß stab wiederum ist - insbesondere bei Stereomikroskopen mit modularem Aufbau - typischerweise das Produkt aus der Vergrößerung einer Vorsatzlinse, der Vergrößerung eines Objektivs, dem Tubus-Faktor einer Zwischenoptik, einer Tubus-Linse und dem Vergrößerungsfaktor eines Zoom-Systems in seiner jeweiligen Zoom-Position. Die aus den Abbildungsmaßstabs- und Vergrößerungsangaben dieser Komponenten errechnete Vergrößerung wird im Folgenden Nominal- bzw. Nenn-Vergrößerung genannt. Da sämtliche der oben genannten Komponenten mit Fertigungsabweichungen und Messungenauigkeiten behaftet sind, ist die Angabe eines Nominal-Abbildungsmaßstabes oder einer Nominal-Gesamtvergrößerung für Messaufgaben an einem Objekt in der Regel zu ungenau.

Eine exakte Bestimmung eines vorliegenden Abbildungsmaßstabes durch Vergleich von Objekt- und Bildgröße ist ebenfalls bekannt. Bei Stereomikroskopen mit variabler Vergrößerung ist es ferner möglich, bestimmte Vergrößerungswerte, in der Regel Werte einer maximalen bzw. einer minimalen Vergrößerung, zu kalibrieren. Derartige Kalibrierungen sind jedoch nur für die jeweiligen Vergrößerungswerte, bei denen die Kalibrierung durchgeführt wurde, gültig. Entsprechend ist es bei derartigen Mikroskopen auch nicht üblich, eine Anpassung einer Vergrößerungsanzeige aufgrund einer ausgeführten Kalibrierung vorzunehmen.

Ein bekanntes Verfahren, Mikroskopbilder auszuwerten, besteht darin, diese Bilder mit standardisierten Strichplatten als Referenz bzw. Referenzmaß zu überlagern. Dabei können beispielsweise Vergleichsstrecken oder Toleranzfelder auf der Strichplatte aufgebracht sein. Eine exakte Objektbeurteilung kann in diesem Fall nur bei exakt dem Abbildungsmaßstab erfolgen, für den die Strichplatten angefertigt sind. Für Stereomikroskope mit variabler Vergrößerung ist es daher wichtig, daß der Abbildungsmaßstab exakt eingestellt werden kann.

Aufgabe der vorliegenden Erfindung ist es, eine Kalibrierung der Vergrößerung eines Stereomikroskops mit variabler Vergrößerung für beliebige Vergrößerungen in einfacher Weise zu ermöglichen, wobei auf der Grundlage einer derartigen Kalibrierung eine Kalibrierung über den gesamten Vergrößerungsbereich ableitbar sein soll. Es wird ferner angestrebt, über den gesamten Vergrößerungsbereich eines derartigen Mikroskops eine digitale Anzeige einer konkret eingestellten Vergrößerung bereitzustellen.

Die Aufgabe wird gelöst, durch ein Verfahren mit den Merkmalen des Patentanspruchs 1 sowie ein Stereomikroskop mit den Merkmalen des Patentanspruchs 7.

Erfindungsgemäß ist nun eine Kalibrierung eines mit einem Zoom-System ausgestatteten Stereomikroskops an beliebigen Vergrößerungspositionen bzw. Zoompositionen realisierbar. Durch entsprechende Wahl der erfindungsgemäß eingesetzten Objekt- sowie Okular-Referenzmaße sind zunächst (im Rahmen des Zoom-Bereiches eines zu kalibrierenden Mikroskops) beliebige Vergrößerungen definierbar. Erfindungsgemäß ist nach einer Kalibrierung auf der Grundlage eines Objekt- und Okular-Referenzmaßpaares eine Kalibrierung über den gesamten Zoom-Bereich zur Verfügung gestellt bzw. rechnerisch ableitbar. Erfindungsgemäß werden anhand eines Objektiv-Okular-Referenzmaßpaares durch die Betätigung des Zooms vorgegebene Ist-Vergrößerungen am Mikroskop eingestellt. Die hierbei vorliegende Stellung (der einzelnen Linsen) des Zooms werden beispielsweise mittels Inkrementalgebers erfaßt, wobei für jede Zoomstellung ein Nominal-Vergrößerungswert abgespeichert ist. Durch rechnerischen Vergleich der Ist-Vergrößerung mit der Nominal-Vergrößerung ist ein Korrekturfaktor berechenbar, welcher anschließend zur Kalibrierung des gesamten Zoom-Bereiches eingesetzt werden kann.

Vorteilhafte Ausgestaltungen der Erfindung sind Gegenstand der Unteransprüche.

Gemäß einer bevorzugten Ausführungsform des erfindungsgemäßen Verfahrens wird die Feststellung und In-Beziehung-Setzung von Ist-Vergrößerung und Nominal-Vergrößerung des Stereomikroskops für mindestens zwei unterschiedliche Zoom-Positionen durchgeführt, wobei die Berechnung von Vergrößerungen für weitere Zoom-Positionen auf der Grundlage der In-Beziehung-Setzung der jeweiligen einander zugeordneten Ist-Vergrößerungen und Nominal-Vergrößerungen durchgeführt wird. Es erweist sich insbesondere als vorteilhaft, eine rechnerische In-Beziehung-Setzung von Ist-Vergrößerung und Nominal-Vergrößerung an zwei Zoom-Positionen durchzuführen. Mit dieser Maßnahme ist es beispielsweise möglich, mehrere Kalibrierungen über einen Zoom-Bereich eines Stereomikroskops vorzunehmen, und anschließend die jeweiligen Vergrößerungs-Zwischenwerte zu berechnen. Mit dieser Maßnahme ist die Genauigkeit einer Kalibrierung weiter steigerbar.

Zweckmäßigerweise weist das Okular-Referenzmaß in einem Gesichtsfeld als Skalierung wenigstens einen Kreis bekannten Durchmessers auf. Derartige Kreise sind in einfacher Weise mit einem Bild eines herkömmlichen Objekt-Mikrometers in optische Übereinstimmung zu bringen.

Gemäß einer bevorzugten Ausführungsform des erfindungsgemäßen Verfahrens werden die berechneten, den weiteren Brennweitenwerten entsprechenden Vergrößerungen am Stereomikroskop digital angezeigt. Dadurch, daß die Vergrößerungen des Stereomikroskops für eine beliebige Anzahl von Stellungen des Zoom-Systems berechnet und abgespeichert werden, ist eine digitale Anzeige der entsprechenden Vergrößerungen möglich. Zur Verwirklichung einer derartigen digitalen Anzeige ist es lediglich notwendig, beispielsweise mittels eines Inkrementalgebers eine konkrete Zoom-Stellung zu bestimmen und mit einem entsprechend korrelierten Vergrößerungswert in Beziehung zu setzen.

Zweckmäßigerweise erfolgt die Veränderung der Brennweite des Zoom-Objektivs manuell oder motorisch. Die erfindungsgemäße Zur-Übereinstimmung-Bringung von Objektiv- und Okular-Referenzmaßen ist manuell in einfacher Weise durchführbar. Bei Vorsehen entsprechender optischer Erkennungssysteme ist die optische Übereinstimmung auch automatisch feststellbar.

Gemäß einer besonders bevorzugten Ausführungsform des erfindungsgemäßen Verfahrens wird die optische Übereinstimmung von Objekt-Referenzmaß und Okular-Referenzmaß manuell oder automatisch einer Prozessoreinrichtung des Stereomikroskops mitgeteilt, mittels welcher dann die Berechnung der Vergrößerungen für die weiteren Positionen durchgeführt wird. Insbesondere ist es vorteilhaft, eine manuelle Betätigung des Zoom-Systems zur Einstellung einer optischen Übereinstimmung durchzuführen, und bei Feststellung einer derartigen Übereinstimmung durch Betätigung einer entsprechenden Bedientaste der Prozessoreinrichtung dies manuell mitzuteilen.

Mittels der erfindungsgemäßen Kalibrierung ist in besonders vorteilhafter Weise ein Vermessen einer Strecke in der Objektebene des Stereomikroskops möglich. Hierzu wird ein Bild einer zu vermessenden Strecke in der Objektebene durch Veränderung der Zoom-Position des Zoom-Systems mit einer bekannten Strecke in dem Okular-Referenzmaß zur optischen Übereinstimmung gebracht, und aus dem für diese Zoom-Position ermittelten Abbildungsmaßstab und der bekannten Strecke in dem Okular-Referenzmaß die Länge der zu messenden Strecke berechnet.

Es erweist sich als vorteilhaft, eine Länge einer derart gemessenen Strecke digital zur Anzeige zu bringen.

Es ist insbesondere möglich, die im Rahmen der Kalibrierung verwendeten Kreise auf dem Okular-Referenzmaß auch für eine derartige Längenvermessung einzusetzen. Es ist ebenfalls denkbar, ein Okular-Referenzmaß mit einer Anzahl von Kreisen zur Verfügung zu stellen, bei welchem ein Teil der Kreise zur Kalibrierung und ein anderer Teil zur Längenvermessung vorgesehen ist.

Die Erfindung wird nun anhand der beigefügten Zeichnung weiter beschrieben. In dieser zeigt
- Figur 1: in schematischer seitlicher Ansicht die wesentlichen Komponenten eines mit einem Zoom-System ausgestatteten Stereomikroskops, an dem die vorliegende Erfindung realisiert ist,
- Figur 2: eine bevorzugte Ausführungsform eines erfindungsgemäß verwendbaren Zoom-Systems in seitlicher Schnittansicht, und
- Figur 3: eine Draufsicht einer bevorzugten Ausführungsform eines erfindungsgemäß eingesetzten Okular-Referenzmaßes.

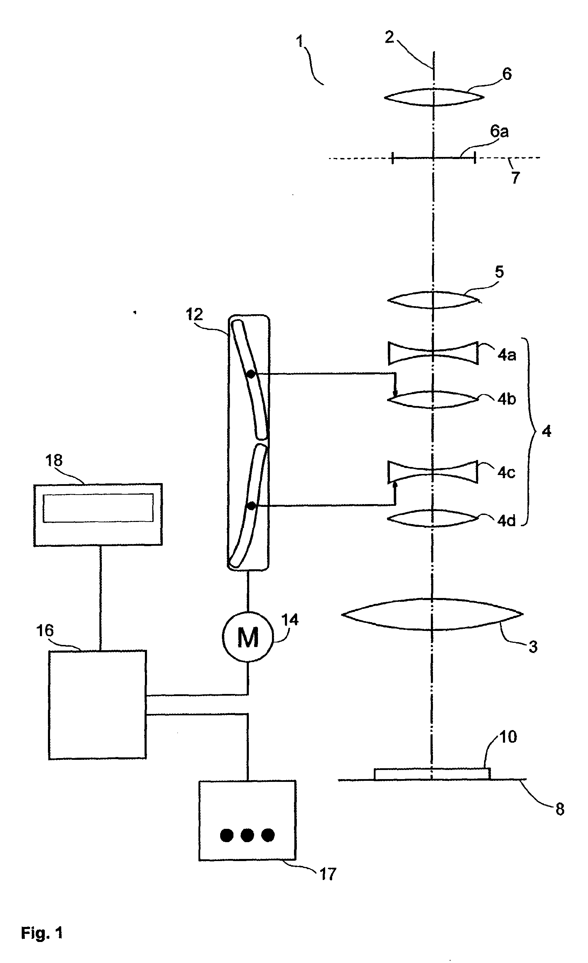

Eine bevorzugte Ausführungsform eines Stereomikroskops, an dem die vorliegende Erfindung realisiert ist, ist in Figur 1 dargestellt. Das insgesamt mit 1 bezeichnete Stereomikroskop weist entlang einer optischen Achse 2 ein positionsfestes Objektiv 3, ein insgesamt mit 4 bezeichnetes Zoom-Fernrohr, eine Tubuslinse 5 und ein Okular 6 auf. Eine Objektebene des Mikroskops ist mit 8 bezeichnet. Auf dieser Objektebene ist als Objekt-Referenzmaß ein Objekt-Mikrometer 10 positioniert. Positionierungsmittel, beispielsweise Mittel zur Festlegung des Objekt-Mikrometers 10 auf der Objektebene 8, sind nicht im einzelnen dargestellt. Bei Stereomikroskopen sind (hier nicht dargestellt) Zoom-Fernrohre, Tubuslinsen und Okulare für einen jeweils zum rechten bzw. zum linken Auge verlaufenden Abbildungskanal doppelt vorhanden.

Das positionsfeste Objektiv 3 ist als Mono-Objektiv ausgebildet, so daß dieses gemeinsam durch die zwei parallelen Zoom-Systeme und entsprechend zwei parallel angeordneten Tubuslinsen und Okulare genutzt wird. Es sind auch Stereomikroskope nach Greenough bekannt, bei denen zwei getrennte Zoom-Objektive das Objekt in die dort jeweils entstehenden zwei Zwischenbilder abbilden. Auch bei derartigen Stereomikroskopen ist die vorliegende Erfindung einsetzbar.

In an sich bekannter Weise sind wenigstens zwei der Linsenglieder 4a, 4b, 4c und 4d des Zoom-Fernrohrs 4 durch Betätigung einer Spindel bzw. Steuerkurve 12 zur Realisierung eines mechanischen Ausgleichs derart, daß der Bildort bei veränderlicher Vergrößerung des Zoom-Fernrohrs unverändert bleibt, verschiebbar. Insbesondere ist ein derartiges Zoom-Fernrohr 4 derart realisierbar, daß die äußeren Linsen 4a, 4d bezüglich der optischen Achse 2 ortsfest, und die mittleren Linsen 4b, 4c verschiebbar sind.

Das Okular 6 ist mit einer Okular-Strichplatte 6a als Okular-Referenzmaß ausgebildet. Die Okular-Strichplatte ist hierbei in der Zwischenbildebene 7 des Stereomikroskops zu positionieren, wodurch in an sich bekannter Weise ein Meßokular zur Verfügung gestellt ist.

Die Steuerkurve 12 ist mittels eines Motors 14 automatisch betätigbar, wobei eine Steuerung des Motors 14 durch einen Prozessor 16 realisiert ist. Mittels eines in Figur 1 nicht dargestellten Handrades sind die Linsen des Zoom-Objektivs 4 auch manuell verstellbar. Mit 17 ist eine als Bedien-Panel ausgebildete Einheit bezeichnet, über welche Befehle beispielsweise zum Start oder zur Beendigung eines Kalibriervorgangs in das System eingebbar sind.

Das erfindungsgemäße Stereomikroskop ist ferner mit einem Display 18 zur Anzeige einer aktuellen Vergrößerung des Stereomikroskops ausgebildet. Das Display 18 wird durch den Prozessor 16 mit entsprechenden Informationen beaufschlagt, wie im folgenden zu erläutern sein wird.

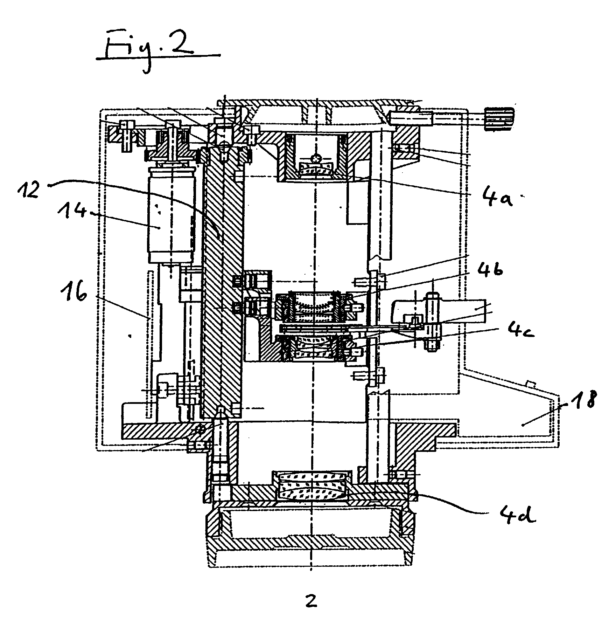

Eine bevorzugte Ausführungsform eines erfindungsgemäß einsetzbaren Zoom-Objektivs ist in Figur 2 in größerem Detail dargestellt, wobei die bereits unter Bezugnahme auf Figur 1 erläuterten Komponenten mit gleichen Bezugszeichen versehen sind.

Wiederum unter Bezugnahme auf Figur 1 sei davon ausgegangen, daß das Objekt-Mikrometer 10 und die Okular-Strichplatte 6a eine bekannte Skalierung bzw. Skalenaufteilung aufweisen.

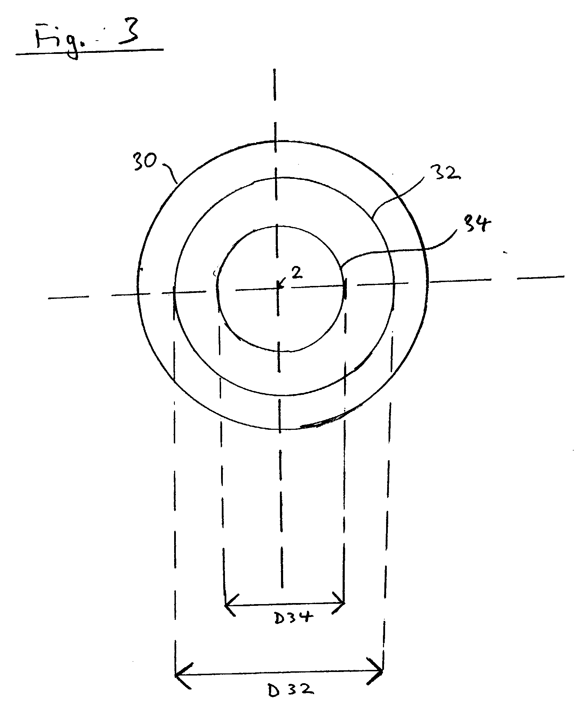

Eine bevorzugte Ausführungsform einer derartigen Okular-Strichplatte 6a ist in Figur 3 dargestellt. Man erkennt dort innerhalb eines Gesichtsfeldes 30 zwei konzentrische Kreise 32, 34 mit jeweiligen Durchmessern D32 bzw. D34. Die Durchmesser D32 und D34 sind vorbekannt. Es ist ebenfalls möglich, eine derartige Okular-Strichplatte 6a mit nur einem Kreis, oder mit einer beliebigen anderen Anzahl von Kreisen auszubilden. Diese Kreise sind jeweils zur Kalibrierung und/oder zur Streckenmessung einsetzbar, wie im folgenden im einzelnen erläutert wird.

Da, wie erwähnt, auch die Skalierung des Objekt-Mikrometers 10 vorbekannt ist, kann nun eine Referenzstrecke auf dem Objekt-Mikrometer 10 durch Veränderung der Vergrößerung des Zooms-Systems 4 mit einem der Durchmesser D32 oder D34 zur optischen Übereinstimmung gebracht werden, d.h. im Gesichtsfeld 30 bzw. Zwischenbildebene 7 entspricht das Referenzmaß einem der Durchmesser D32 oder D34. Beispielhaft sei davon ausgegangen, daß im vorliegenden Fall zunächst eine optische Übereinstimmung mit dem größeren Durchmesser D32 bewerkstelligt wird.

Bei bekannter Bemaßung der Referenzstrecke des Objekt-Mikrometers 10 und des Durchmessers D32 der Okular-Strichplatte ist eine bei optischer Übereinstimmung dieser Maße konkret gegebene Vergrößerung (Ist-Vergrößerung) unmittelbar herleitbar. In diesem Falle ist die Referenzstrecke umgekehrt proportional zur Vergrößerung. Bei der nun gegebenen Übereinstimmung läßt sich der Proportionalitätsfaktor in einfacher Weise berechnen. Insgesamt gilt, daß die Länge des Referenzmaßes in der Objektebene gleich dem Durchmesser des mit ihm zur optischen Übereinstimmung gebrachten Kreises 32 dividiert durch den einleitend erläuterten Abbildungsmaßstab ist. Die Gesamtvergrößerung des Stereomikroskops ergibt sich schließlich aus Multiplikation dieses Abbildungsmaßstabes mit der Vergrößerung des Okulars 6.

Mittels eines (nicht dargestellten) Inkremental-Gebers wird die bei dieser optischen Übereinstimmung vorliegende Zoom-Stellung bzw. die Stellung der einzelnen Linsenglieder bestimmt. Für die so ermittelte Zoom-Stellung wird eine in einem geeigneten (nicht dargestellten) Speichermittel gespeicherte Nominal-Vergrößerung des Zoom-Systems 4 ausgelesen und auf den Prozessor 16 gegeben. Anhand der bestimmten Ist-Vergrößerung und der gespeicherten Nominal-Vergrößerung ist der Prozessor in der Lage, einen Korrekturfaktor zu berechnen, welcher über den gesamten Zoom-Bereich des Zoom-Objektivs 4 bzw. den gesamten Vergrößerungsbereich des Stereomikroskops zur Berechnung tatsächlicher Vergrößerungen angesetzt werden kann. Somit ist es aufgrund der dargestellten Kalibrierung lediglich in einer Stellung des Zoom-Systems 4 möglich, eine Kalibrierung über den gesamten Zoom-Bereich bzw. Vergrößerungsbereich des Stereomikroskops zu erhalten.

Zweckmäßigerweise erfolgt die oben beschriebene Bestimmung einer Ist-Vergrößerung bei gleicher Objekt-Mikrometer-Referenzstrecke auch für den zweiten Kreis 34 der Okular-Strichplatte 6a, so daß eine zweite Ist-Vergrößerung festgestellt werden kann. In analoger Weise wird auch hier ein Vergleich mit einer gespeicherten Nominal-Vergrößerung durchgeführt, wobei zweckmäßigerweise die beiden so erhaltenen Korrekturfaktoren miteinander in Beziehung gesetzt werden, und beispielsweise ein Mittelwert gebildet wird. Es ist in diesem Zusammenhang ebenfalls denkbar, einen ersten Zoom-Teilbereich mit einem ersten Korrekturfaktor und einen zweiten Zoom-Teilbereich mit einem zweiten Korrekturfaktor zu korrigieren.

In bevorzugter Ausgestaltung erfolgt die Durchführung des dargestellten Verfahrens beispielsweise derart, daß bei eingestellter optischer Übereinstimmung zwischen einer Referenzstrecke des Objekt-Mikrometers 10 und einem Kreis 32, 34 der Okular-Strichplatte 6a eine Bedientaste an dem Bedienpanel 17 betätigt wird, mittels welcher dem Prozessor 16 die optische Übereinstimmung mitgeteilt werden kann. Zweckmäßigerweise ist es ebenfalls möglich, dem Prozessor 16 per Tastendruck mitzuteilen, welcher der Kreise 32, 34 aktuell im Rahmen der Kalibrierung betrachtet wird.

Wie bereits erwähnt, ist der Prozessor 16 in der Lage, mit einer für eine bestimmte Zoom-Stellung ermittelten Ist-Vergrößerung und einer dieser Stellung zugeordneten Nominal-Vergrößerung Vergrößerungen über den gesamten Verstellbereich des Zoom-Systems bzw. des Mikroskops zu berechnen. Die somit für beliebige Zoom-Stellungen innerhalb des Zoom-Bereiches berechenbaren Vergrößerungen sind anschließend zur Anzeige an das Display 18 übertragbar. Hierbei sei noch einmal darauf hingewiesen, daß zum Erhalt der Gesamt-Vergrößerung des Stereomikroskops der jeweils erhaltene Abbildungsmaßstab mit der Okular-Vergrößerung zu multiplizieren ist.

Wie bereits erwähnt, ist es mit einem wie vorstehend beschrieben kalibrierten Stereomikroskop in einfacher Weise möglich, Strecken bzw. Objektgrößen in der Objektebene 8 zu vermessen. Hierzu wird das Bild der zu vermessenden Strecke durch Verändern der Zoom-Position mit einem der Kreise 32, 34 des Okular-Referenzmaßes 6a in der Zwischenbildebene 7 zur optischen Übereinstimmung gebracht. Auf der Grundlage des bekannten Durchmessers eines derartigen Kreises 32, 34 und eines (in jeder Stellung des Zoom-Systems) bekannten bzw. erfindungsgemäß kalibrierten Abbildungsmaßstabes ist es nun in einfacher Weise möglich, die in der Objektebene 8 vorgegebene Strecke zu vermessen.

## Patentansprüche

1. Verfahren zur Kalibrierung der Vergrößerung eines Stereomikroskops mit variabler Vergrößerung, **gekennzeichnet durch** folgende Schritte:
- Positionierung eines Objekt-Referenzmaßes (10) mit einer vorbekannten Skalierung, insbesondere eines Objekt-Mikrometers, in einer Objektebene (8) des Stereomikroskops,
- Bereitstellung eines Okular-Referenzmaßes (6a) vorbekannter Skalierung, insbesondere einer Strichplatte, in einer Zwischenbildebene (7) des Stereomikroskops,
- Veränderung der Vergrößerung des Mikroskops derart, daß das Bild des Objekt-Referenzmaßes (10) mit dem Okular-Referenzmaß (6a) in der Zwischenbildebene (7) zur optischen Übereinstimmung gebracht wird, zur Bestimmung einer dieser Übereinstimmung entsprechenden Zoom-Position eines verwendeten Zoom-Systems (4) ,
- Feststellung einer Ist-Vergrößerung des Stereomikroskops in dieser Zoom-Position auf der Grundlage des **durch** die zur Übereinstimmung gebrachten Skalierungen von Objekt-Referenzmaß (10) und Okular-Referenzmaß (6a) definierten Abbildungsmaßstabes,
- Feststellung einer Nominal- bzw. Nenn-Vergrößerung des Stereomikroskops in dieser Zoom-Position,
- rechnerische In-Beziehung-Setzung von Ist-Vergrößerung und Nominal-Vergrößerung,
- Berechnung von Vergrößerungen für weitere Zoom-Positionen, insbesondere über den gesamten Zoom-Bereich, auf der Grundlage der rechnerischen In-Beziehung-Setzung von Nominal-Vergrößerung und Ist-Vergrößerung.

2. Verfahren nach Anspruch 1, **dadurch gekennzeichnet, daß** die Feststellung und In-Beziehung-Setzung von Ist-Vergrößerung und Nominal-Vergrößerung des Stereomikroskops für mindestens zwei unterschiedliche Zoom-Positionen durchgeführt wird, und die Berechnung der Vergrößerungen für weitere Zoom-Positionen auf der Grundlage der In-Beziehung-Setzung der jeweiligen einander zugeordneten Ist-Vergrößerungen und Nominal-Vergrößerungen durchgeführt wird.

3. Verfahren nach einem der vorstehenden Ansprüche 1 oder 2, **dadurch gekennzeichnet, daß** das Okular-Referenzmaß (6a) in einem Gesichtsfeld (30) einer Zwischenbildebene (7) des Stereomikroskops in Form wenigstens eines Kreises (32, 34) mit bekanntem Durchmesser ausgebildet ist.

4. Verfahren nach einem der vorstehenden Ansprüche, **dadurch gekennzeichnet, daß** die festgestellten bzw. berechneten Vergrößerungen am Stereomikroskop digital angezeigt werden.

5. Verfahren nach einem der vorstehenden Ansprüche, **dadurch gekennzeichnet, daß** die Veränderung der Zoom-Position des Zoom-Systems (4) manuell oder motorisch, insbesondere automatisch, durchgeführt wird.

6. Verfahren nach einem der vorstehenden Ansprüche, **dadurch gekennzeichnet, daß** die optische Übereinstimmung von Objekt-Referenzmaß (10) und Okular-Referenzmaß (6a) manuell oder automatisch einer Prozessoreinrichtung (16) des Stereomikroskops mitgeteilt wird, wobei die Prozessoreinrichtung (16) auf der Grundlage der In-Beziehung-Setzung der wenigstens einen Ist-Vergrößerung und der wenigstens einen Nominal-Vergrößerung die Berechnung der Vergrößerungen für die weiteren Zoom-Positionen durchführt.

7. Stereomikroskop mit einem Zoom-System zur variablen Einstellung von Vergrößerungen, mit
- Mitteln zur Positionierung eines Objekt-Referenzmaßes (10) mit einer vorbekannten Skalierung, insbesondere eines Objekt-Mikrometers, in einer Objektebene (8),
- einem Okular-Referenzmaß (6a) vorbekannter Skalierung, insbesondere einer Okular-Strichplatte, in einer Zwischenbildebene (7),
- Mitteln zur Veränderung der Vergrößerung des Stereomikroskops derart, daß das Bild des Objekt-Referenzmaßes (10) mit dem Okular-Referenzmaß (6a) zur optischen Übereinstimmung bringbar ist, zum Erhalt einer Ist-Vergrößerung des Stereomikroskops in einer der Übereinstimmung entsprechenden Zoom-Position, die dem durch die Skalierungen von Objekt-Referenzmaß (10) und Okular-Referenzmaß (6a) definierten Abbildungsmaßstab entspricht,
- Mitteln zur Feststellung der Nominal- bzw. Nenn-Vergrößerung des Stereomikroskops in dieser Zoom-Position und zur rechnerischen In-Beziehung-Setzung der für diese Zoom-Position ermittelten Ist-Vergrößerung und Nominal-Vergrößerung, und
- Mitteln zur Berechnung von Vergrößerungen für weitere Zoom-Positonen, insbesondere über den gesamten Zoom-Bereich, auf der Grundlage der rechnerischen In-Beziehung-Setzung von Nominal-Vergrößerung und Ist-Vergrößerung.

8. Stereomikroskop nach Anspruch 7, **dadurch gekennzeichnet, daß** das Okular-Referenzmaß (6a) in einem Gesichtsfeld (30) der Zwischenbildebene (7) des Stereomikroskops in Form wenigstens eines Kreises (32, 34) mit bekanntem Durchmesser ausgebildet ist.

9. Stereomikroskop nach einem der Ansprüche 7 oder 8, **gekennzeichnet durch** eine Einrichtung (18) zur digitalen Anzeige von Vergrößerungswerten.

10. Stereomikroskop nach einem der Ansprüche 7 bis 9, **gekennzeichnet durch** Mittel zur manuellen und/oder motorischen, insbesondere automatischen, Verstellung des Zoom-Objektivs (4).

11. Stereomikroskop nach einem der Ansprüche 7 bis 10, **gekennzeichnet durch** eine Einrichtung (17) zur manuellen oder automatischen Mitteilung der Erreichung einer optischen Übereinstimmung zwischen Objekt-Referenzmaß (10) und Okular-Referenzmaß (6a).

12. Verwendung eines nach einem der Ansprüche 1 bis 6 kalibrierten Stereomikroskops oder eines Stereomikroskops nach einem der Ansprüche 7 bis 11 zum Vermessen einer Strecke, **dadurch gekennzeichnet, daß** ein Bild einer zu vermessenden Strecke in der Objekt-Ebene (8) durch Veränderung der Zoom-Position des Zoom-Systems (4) mit einer bekannten Strecke in dem Okular-Referenzmaß (6a) zur optischen Übereinstimmung gebracht wird, und aus dem für diese Zoom-Position ermittelten Abbildungsmaßstab und der bekannten Strecke in dem Okular-Referenzmaß (6a) die Länge der zu messenden Strecke, in der Objektebene (8) berechnet wird.

13. Verwendung nach Anspruch 12, **dadurch gekennzeichnet, daß** die Länge der gemessenen Strecke mittels der Einrichtung (18) zur Anzeige gebracht wird.
